# EUROPEAN PATENT APPLICATION

(11) **EP 1 162 445 A2**
(43) Date of publication of application: **12.12.2001**
(21) Application number: 01112073.0
(22) Date of filing: 28.05.2001
(51) Int. Cl.: G01N 3/42, G01N 3/48

(54) **Apparatus for nondestructive hardness testing by indentation**

(30) Priority: 08.06.2000 IT VR000052
(71) Applicant: Universita degli Studi di Trento, 38100 Trento (IT)
(72) Inventor: Piazza, Maurizio, 36033 Isola Vicentina (Vicenza) (IT); Girardi, Stefano, 38060 Cimone (Trento) (IT)
(74) Representative: Modiano, Guido, Dr.-Ing.

(57) **Abstract**

An apparatus (1) for performing nondestructive hardness testing by indentation, which comprises a supporting structure (2), a coupling means (5) which is suitable to detachably anchor the supporting structure (2) to an object to be tested, and a probing tool (3) supported by the supporting structure (2) in order to perform, on command, movements toward or away from the object to be tested. The apparatus (1) furthermore comprises at least one actuation device (4) which is mounted on the supporting structure (2) and is meant to move the probing tool (3) alternatively toward the object to be tested, so as to make it penetrate therein to a preset depth, and away from it.

## Description

The present invention relates to an apparatus for performing nondestructive hardness testing by indentation on installed objects or structures made of various materials, such as for example wood, plastics, metal, concrete and others.

Among the several nondestructive testing methods currently available and applicable, in particular, to wooden structures, hardness testing by indentation stands out because of its extreme simplicity of execution and for the thoroughness of its results, from which it is possible to obtain detailed information regarding the mechanical characteristics of the material being examined and therefore the strength and deformability of an object or structural element to be tested.

Hardness testing by indentation substantially consists in measuring the force that needs to be applied to an appropriate probing tool having preset shape and dimensions in order to make it penetrate to a preset depth into the surface of the object to be tested.

Currently, nondestructive hardness testing by indentation is a fundamental preliminary test for deciding the intervention criteria related to restoration or consolidation work in particular on already-installed wooden structures.

The precision and reliability of the results that can be obtained from such hardness testing by indentation, however, are limited, and this is due mainly to the fact that the machines dedicated to this type of measurement still have a predominantly manual operation.

The measurement instruments currently available to perform nondestructive hardness testing by indentation are generally constituted by an optical sight for controlling the movement of the probe and by an appropriately set dynamometric ring for detecting the force applied to the probe.

Another drawback of current machines for hardness testing by indentation consists in that the readout of the results shown in analog form on the dynamometer is subject to human error. In fact it is evident that it is difficult for the operator to check concurrently the values provided in two different instruments and to correctly interpret these values when they are provided in instantaneous form by the instruments.

Currently, in order to minimize the errors linked to reading the results one often resorts to a larger number of observers who have the task of reading the values indicated on the instruments so as to collect the largest possible data series, from which the values useful for investigation can be obtained by adequate processing.

The collaboration of several people in reading the results, besides being an expenditure in terms of time and costs, is often impossible due to the practical difficulties of reaching the test location, for example when the test is performed on installed structural elements.

The aim of the present invention is to provide an apparatus for performing nondestructive hardness testing by indentation which is capable of eliminating or substantially reducing the above noted drawbacks related to current measurement instruments.

Another object of the present invention is to provide an apparatus which is capable of automatically performing force and penetration measurements, ensuring high and constant repeatability throughout the investigation step, which often requires a statistically significant number of hardness tests.

Another object of the present invention is to provide an apparatus which allows to eliminate or substantially reduce the negative effects linked to the human factor, particularly during the reading of the values indicated on the instrument.

Another object of the present invention is to provide an apparatus by which hardness testing by indentation can be performed even by a single operator who can follow the measurement operations even remotely without need to be close to the instrument.

This aim and these and other objects which will become better apparent hereinafter are achieved by an apparatus for performing nondestructive hardness testing by indentation, comprising a supporting structure, coupling means which are suitable to detachably anchor said supporting structure to an object to be tested, and a probing tool supported by said supporting structure in order to perform, on command, movements toward or away from said object to be tested, characterized in that it comprises at least one actuation device which is mounted on said supporting structure and is meant to move said probing tool alternatively toward said object to be tested, so as to make it penetrate therein to a preset depth, and away from it.

Advantageously, the apparatus also comprises at least one force transducer which is arranged between at least one actuation device and the or each probing tool and is suitable to detect the useful load magnitude for the controlled penetration of said probing tool into said object to be tested.

Conveniently, the apparatus further comprises at least one movement sensor which is suitable to detect the penetration depth of the probing tool into the probe to be tested.

Further features and advantages of the present invention will become better apparent from the following detailed description of some currently preferred examples of embodiment thereof, given only by way of non-limitative example with reference to the accompanying drawings, wherein:
Figure 1 is a first side elevation view of an apparatus according to the invention;
Figure 2 is a second partially sectional side elevation view of the apparatus of Figure 1;
Figure 3 is an enlarged-scale sectional view of the apparatus according to the invention, taken along the plane III-III of Figure 2;
Figure 4 is an enlarged-scale side elevation view of a cutout of the movement sensor provided on the apparatus of Figure 1;
Figure 5 is a plan view of the control and monitoring panel which can be connected to the apparatus of Figure 1.

In the accompanying drawings, identical or similar parts or components have been designated by the same reference numerals.

With reference to the figures, an apparatus according to the invention, designated by the reference numeral 1, has a supporting structure 2, a probing tool 3 which is mounted movably on the supporting structure 2, and an actuation device 4 which is adapted to actuate the movements of the probing tool 3 toward and away from the outer surface of an object to be tested (not shown in the figures).

The supporting structure 2 is preferably composed of a footing 5, a plurality of supporting posts 6 which rise from the footing 5 and are angularly spaced so as to delimit a cage 7, a stiffening plate 8 which is supported by the posts 6, and a second plate 9 which rests, by means of feet 10, on the stiffening plate 8 and is in turn suitable to support the actuation device 4.

Preferably, the actuation device 4 comprises a rotating motor 12 and a reduction unit 13 which is connected upstream to the rotating motor 12 and downstream to a transmission shaft 14 in order to transmit thereto a rotary motion at a rotation rate which is suitable for the requirements of the apparatus 1.

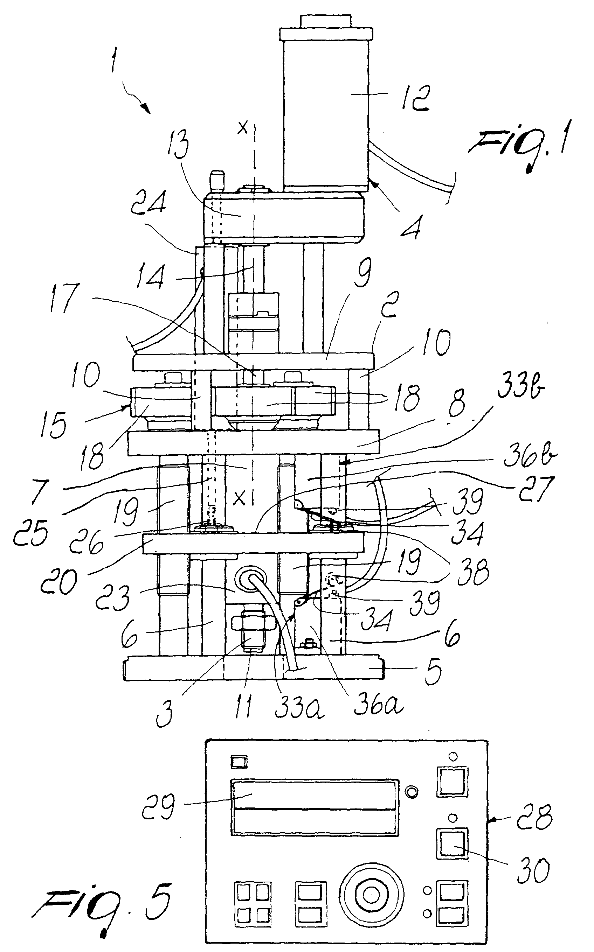

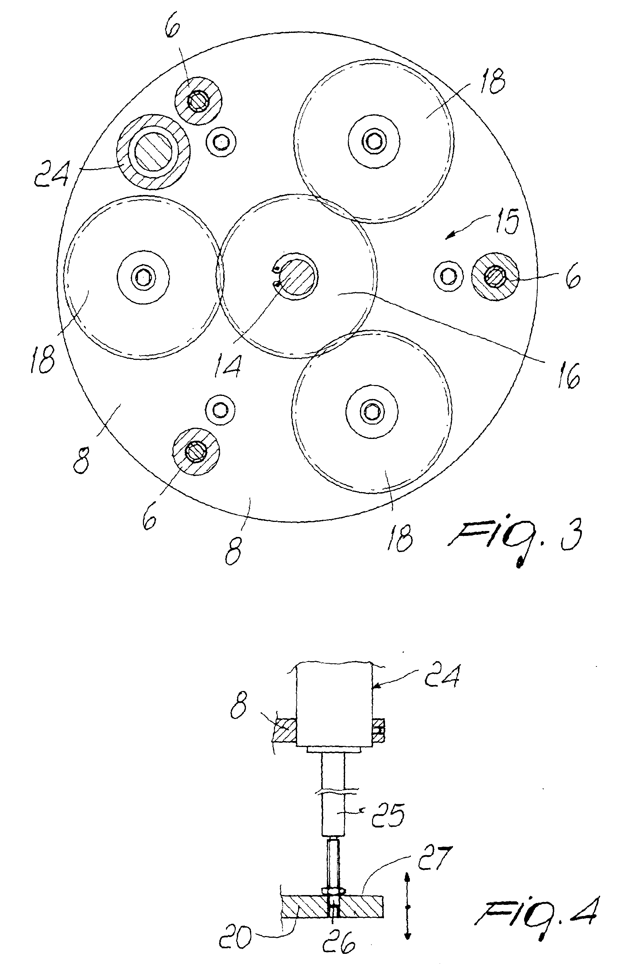

Advantageously, the apparatus 1 further comprises transmission means 15 which are meant to convert the rotary motion available at the transmission shaft 14 into an alternating rectilinear motion of the probing tool 3 toward and away from the object to be tested. As shown in Figures 1, 2 and 3, the transmission means 15 are preferably constituted by a central gear 16 whose rotation axis is substantially vertical and coaxial with respect to the central axis x-x of the cage 7 and is keyed to the free end 17 of the transmission shaft 14, by a plurality of peripheral gears 18 which mesh with the central gear 16, and by a corresponding plurality of threaded pivots 19 which are keyed to a respective gear 18, which are mounted on the supporting structure 2, can rotate freely about their main axis and are arranged with an angular spacing in an intermediate position between two consecutive supporting posts 6.

In addition to distributing the rotary motion from the transmission shaft 14 to the threaded pivots 19, the transmission means 15 convert the rotary motion of the pivots 19 into a corresponding rectilinear motion of a platform 20 along the axis x-x so as to allow, according to the direction of rotation of the threaded pivots 19, the movement of platform 20 respectively toward or away from the object to be tested.

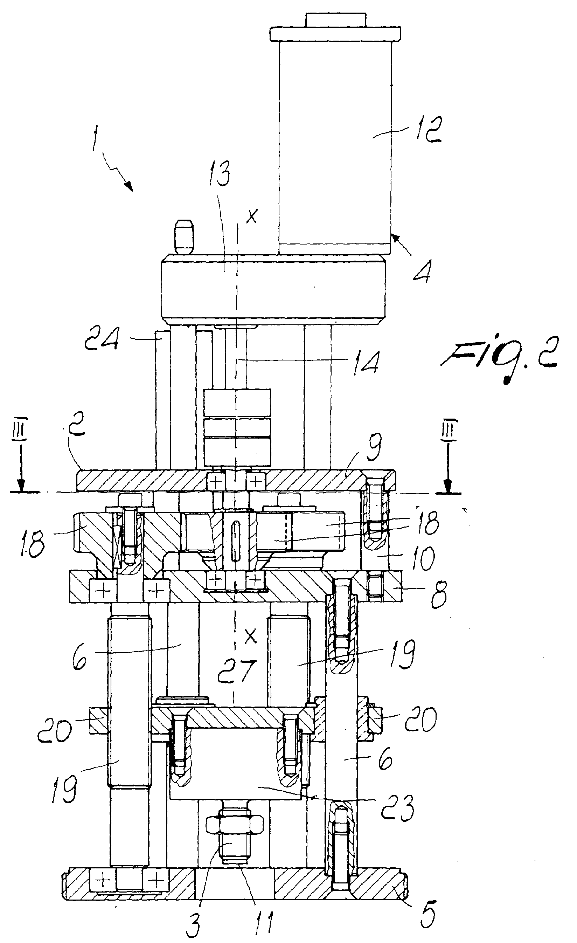

As shown in Figure 2, the platform 20 has a plurality of internally threaded through holes 21 (i.e., holes which are shaped so as to form a female thread), each of which is designed to couple to a respective threaded pivot 19, so that a synchronous and coherent rotation of all the threaded pivots 19 applies to the platform 20 a corresponding movement in the direction of the central axis x-x.

Figure 1 shows that the apparatus 1 has a first stroke limiter 33a and a second stroke limiter 33b which are respectively arranged on the footing 5 and on the stiffening plate 8, in order to delimit the movement of the platform 20 toward or away from the object to be tested. Both stroke limiters 33a and 33b are provided, at their end, with a rod 34 in which one end is pivoted to the respective base 36a and 36b and the other end is free and meant to interact with the platform 20 by virtue of a roller 38. For example, if the platform 20 moves too close to the object to be tested, in order to avoid damaging the apparatus 1 and the outer surface of the object, the platform 20 is meant to engage the roller 38 of the stroke limiter 33a and to force the respective rod 34 to flex until it actuates a push button 39 which is arranged on the base 36a and through which the request to interrupt the stroke of the platform 20 is sent to a control unit 28 (see Figure 5).

Advantageously, between the platform 20 and the probing tool 3 there is a load cell 23 of any known and suitable type, such as a strain-gauge transducer, which is meant to detect the useful load magnitude upon the controlled penetration of the probing tool 3 into the object being examined.

The apparatus 1 is furthermore provided with a movement sensor 24 which is suitable to detect the penetration depth of the probing tool 3 into the surface of the object to be tested. As shown in Figures 1 and 4, the movement sensor 24, preferably constituted by an electronic movement comparator, has, at its end, a tab 25 which has a free end 26 which is meant to abut, during use, against the upper surface 27 of the platform 20 so as to constantly detect the relative position of the platform 20 with respect to the supporting structure 2. In particular, the movement sensor 24 is meant to control the penetration depth of the head 11 of the probing tool 3 into the surface of the object to be tested and to send to the control unit 28 (shown in Figure 5) a signal which indicates that the preset depth has been reached when such depth is equal to 5 mm.

At the same time the movement sensor 24 registers the preset penetration, the control unit 28 blocks the advancement of the platform 20 toward the surface to be tested, acquires from the load cell 23 the value of the force useful for penetration applied to the probing tool 3, and displays the acquired value on a digital display 29. The operator assigned to measurement merely has to note the value indicated on the display and, for example by virtue of a suitable push button 30, reset the instrument for a subsequent measurement.

By way of the control unit 28, the apparatus 1 can further be interfaced with a computer, for example of the portable type (not shown in the figures), equipped with suitable programs for acquiring and processing the data detected during the various measurements performed, and for creating databases which can be managed by means of currently used commercial programs.

The above described apparatus 1 is susceptible of numerous modifications and variations which are within the scope of the protection defined by the appended claims.

Thus, for example, the apparatus 1 can be provided with an actuation device 4, which is designed to move the platform 20 so as to move the probing tool 3 toward or away from the object to be tested, and with a linear actuator, for example of a pneumatic type (not shown in the figures), which is mounted on the supporting structure 2 and rests, during use, against the probing tool 3 in order to apply thereto the useful load for the controlled penetration of the head 11 into the surface to be tested to the preset depth of 5 mm.

The materials and the dimensions may be various according to requirements.

The disclosures in Italian Patent Application No. VR2000A000052 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An apparatus for performing nondestructive hardness testing by indentation, comprising a supporting structure, coupling means which is suitable to detachably anchor said supporting structure to an object to be tested, and at least one probing tool supported by said supporting structure in order to perform, on command, movements toward or away from said object to be tested, **characterized in that** it comprises at least one actuation device which is mounted on said supporting structure and is meant to move said probing tool alternatively toward said object to be tested, so as to make it penetrate therein to a preset depth, and away from said object.

2. The apparatus according to claim 1, **characterized in that** it comprises at least one force transducer which is arranged between at least one actuation device and the at least one probing tool and is suitable to detect the useful load strength for the controlled penetration of said probing tool into said object to be tested.

3. The apparatus according to claim 2, **characterized in that** said at least one force transducer comprises a load cell of the electronic type.

4. The apparatus according to any one of the preceding claims, **characterized in that** it comprises at least one movement sensor which is suitable to detect the penetration depth of said probing tool within said object to be tested.

5. The apparatus according to claim 4, **characterized in that** the or each movement sensor comprises an electronic movement comparator.

6. The apparatus according to any one of the preceding claims, **characterized in that** said supporting structure comprises a footing which is meant to abut, during use, against said object to be tested, a plurality of posts which rise from said footing, at least one stiffening plate which is supported by said posts, and at least one movable platform which has a plurality of through holes, each of which can be coupled to a respective post and is actuated by at least one actuation device so as to move toward or away from said object to be tested by virtue of a telescopic sliding of each through hole of said platform along the respective post.

7. The apparatus according to any one of the preceding claims, **characterized in that** it comprises at least one first stroke limiter and at least one second stroke limiter which are suitable to interrupt respectively the movement of said platform toward and away from said object to be tested, so as to stop it respectively at a minimum distance and at a maximum distance with respect to said object to be tested.

8. The apparatus according to any one of the preceding claims, **characterized in that** at least one actuation device dedicated to the controlled movement of said probing tool comprises at least one rotating motor, at least one reduction unit for the rotary motion generated by the respective rotating motor, and at least one transmission shaft which is actuated by the respective reduction unit, and **in that** it comprises motion transmission means suitable to convert the rotary motion generated by said at least one rotating motor into a reciprocating rectilinear motion of said platform toward and away from said object to be tested.

9. The apparatus according to claim 8, **characterized in that** said transmission means comprises at least one transmission gear which is keyed to the transmission shaft of said actuation device, a plurality of peripheral gears which mesh with said transmission gear, and a corresponding plurality of threaded pivots, each of which can be keyed to a peripheral gear, and **in that** said platform has a plurality of through holes which are internally threaded so as to form a female thread and are each meant to mate with a respective threaded pivot, so that depending on the direction of rotation imparted to said threaded pivots said platform is actuated so as to move toward or away from said object to be tested.

10. The apparatus according to any one of claims 1 to 7, **characterized in that** said at least one actuation device meant for the controlled movement of said probing tool comprises at least one linear actuator.

11. The apparatus according to claim 10, **characterized in that** said linear actuator comprises a hydraulic or pneumatic jack.

12. The apparatus according to any one of the preceding claims, **characterized in that** at least one actuation device is meant to move said probing tool toward and away from said object to be tested and at least one other actuation device is suitable to apply to said probing tool a useful load for the controlled penetration of said probing tool into said object to be tested.

13. The apparatus according to any one of the preceding claims, **characterized in that** said coupling means is formed at said footing, said footing comprising a flange with a threaded lateral edge which is meant to be coupled to a base which is anchored beforehand onto the outer surface of said object to be tested.

14. The apparatus according to claim 13, **characterized in that** said coupling means comprises beak-shaped clamps which are suitable to ensure the firm anchoring of said flange on the respective base.

15. The apparatus according to any one of the preceding claims, **characterized in that** it comprises at least one control unit which is suitable to control, by said at least one actuation device, the approach, penetration and spacing of said probing tool respectively toward, into and from said object to be tested, to receive the information acquired by said load cell and by the or each electronic movement comparator during the test and to process said information, from which average reference values are obtained.
